# EUROPEAN PATENT SPECIFICATION

(11) **EP 1 237 744 B1**
(45) Date of publication and mention of the grant of the patent: **01.10.2003**
(21) Application number: 00979633.5
(22) Date of filing: 27.11.2000
(51) Int. Cl.: B60H 1/32, B60H 1/00

(54) **AIR CONDITIONING SYSTEM FOR A MOTOR VEHICLE**
FAHRZEUGKLIMAANLAGE
SYSTEME DE CONDITIONNEMENT D'AIR POUR VEHICULE A MOTEUR

(30) Priority: 30.11.1999 GB 9928205
(43) Date of publication of application: 11.09.2002
(73) Proprietor: Delphi Technologies, Inc., Troy, MI 48098-2815 (US); Renault s.a.s., 92100 Boulogne Billancourt (FR)
(72) Inventor: ZUPP, Nicholas, G., L-4999 Sprinkange (LU); PITTION, Laurent, F-57000 Metz (FR); COWELL, Timothy, A., L-1255 Luxembourg (LU); HEYS, Malcolm, S., L-8053 Bertrance (LU); MOULIN, Philippe, F-92370 Chaville (FR); BOUISSET, Damien, F-92130 Issy Les Moulineaux (FR); OLIVIER, Gérard, F-78380 Beauvilliers (FR); MENAGER, Jean-Luc, F-92360 Meudon la Forêt (FR)
(74) Representative: Denton, Michael John
(86) International application number: EP0011911
(87) International publication number: WO01040004

(56) References cited:
- EP-A- 0 904 963
- FR-A- 2 769 263
- PATENT ABSTRACTS OF JAPAN vol. 014, no. 203 (M-0966), 25 April 1990 (1990-04-25) & JP 02 041917 A (NIPPON DENSO CO LTD), 13 February 1990 (1990-02-13)
- PATENT ABSTRACTS OF JAPAN vol. 010, no. 021 (M-449), 28 January 1986 (1986-01-28) & JP 60 179322 A (NIPPON DENSO KK), 13 September 1985 (1985-09-13)

## Description

### Technical Field

The present invention relates to an air conditioning system for the passenger compartment of a motor vehicle, and more particularly to an air conditioning system which can provide both heating and cooling for the passenger compartment as specified in the preamble of claim 1 and as shown in prior art FR 2 769 263.

### Background of the Invention

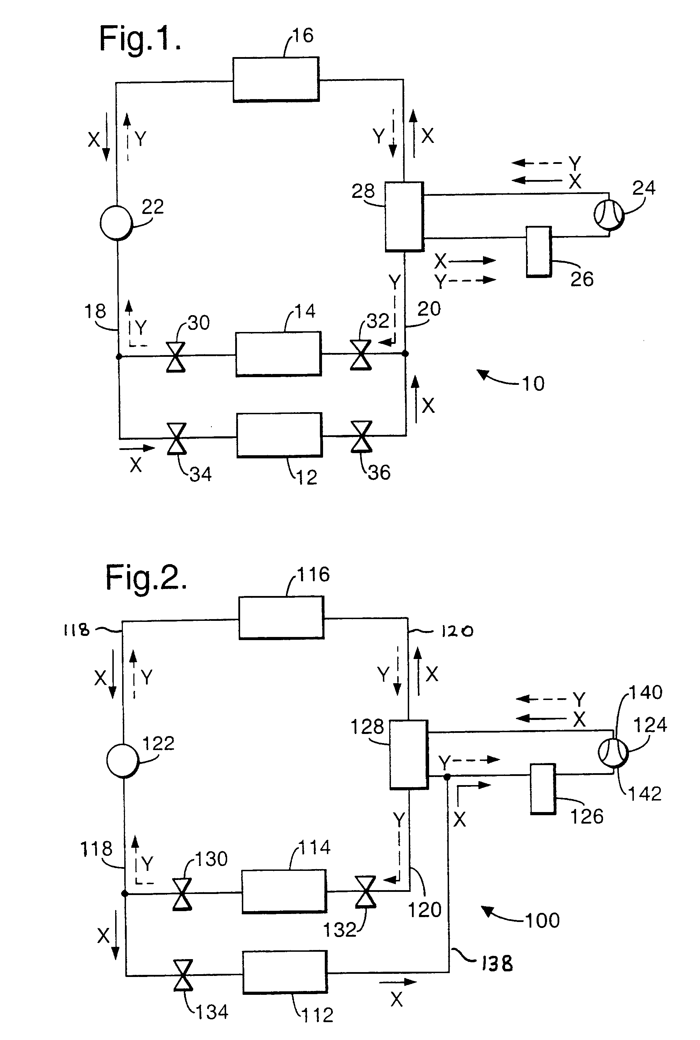

Figure 1 of the accompanying drawings shows another known arrangement for an air conditioning system 10 for a motor vehicle. This known system comprises first and second inside heat exchanger 12,14 (normally located within the passenger compartment) fluidly connected in parallel, and an outside heat exchanger 16 (located outside the passenger compartment). A pair of fluid passages 18,20 connects the inside heat exchangers with the outside heat exchanger to allow the circulation of fluid through the heat exchangers. An expansion device 22 is positioned in one of the fluid passages 18. A compressor 24 and accumulator/dryer 26 is positioned in the other fluid passage 20. When fluid is pumped in direction X by the compressor 24 through the outside heat exchanger 16, the expansion device 22, the first inside heat exchanger 12 and the accumulator/dryer 26 in succession, air passing through the first inside heat exchanger is cooled as the air flows into the passenger compartment of the motor vehicle - cooling mode. When fluid is pumped in direction Y by the compressor 24 in the reverse direction through the second inside heat exchanger 14, the expansion device 22, the outside heat exchanger 16 and the accumulator/dryer 26 in succession, air passing through the second inside heat exchanger is heated as the air flows into the passenger compartment - heat pump mode. A reversing valve 28 is positioned in the other fluid passage 20 to provide the required flow direction for the fluid. First and second valves 30,32 positioned on each side of the second inside heat exchanger 14 substantially prevents flow of fluid through the second inside heat exchanger during the cooling mode. Third and fourth valves 34,36 positioned on each side of the first inside heat exchanger 12 substantially prevents flow of fluid through the first inside heat exchanger during the heat pump mode. A problem with this known arrangement is that refrigerant fluid may be trapped in the first inside heat exchanger 12 when the system 10 is switched off or in heat pump mode. Also, the pressure drop created by the reversing valve 28 and the fourth valve 36 can penalise the performance of the system 10 during the cooling mode.

### Summary of the Invention

It is an object of the present invention to overcome the above mentioned disadvantages and to improve the system of the prior art.

An air conditioning system in accordance with the present invention for the passenger compartment of a motor vehicle is characterised by the features specified in Claim 1.

The use of the third fluid passage bypassing the reverse flow means improves the performance of the air conditioning system during the cooling mode of operation, and allows the removal of a valve between the first heat exchanger and the compressor to further improve performance. Also, the low pressure at the exit of the first heat exchanger allows refrigerant fluid to leave the first heat exchanger when the system is switched to heat pump mode.

### Brief Description of the Drawings

The present invention will now be described, by way of example, with reference to the accompanying drawings, in which:-
Figure 1 is a schematic diagram of a known air conditioning system:
Figure 2 is a schematic diagram of a first embodiment of an air conditioning system in accordance with the present invention;
Figure 3 is a schematic diagram of a second embodiment of an air conditioning system in accordance with the present invention; and
Figure 4 is a schematic diagram of a third embodiment of an air conditioning system in accordance with the present invention.

### Description of the Preferred Embodiment

Referring to Figure 2 of the drawings, the first embodiment of air conditioning system 100 in accordance with the present invention is for use in a motor vehicle for heating or cooling the passenger compartment (not shown) of the motor vehicle. The air conditioning system 100 comprises a compressor 124, an outside heat exchanger 116, an expansion device 122, a first inside heat exchanger 112, a second inside heat exchanger 114, and an accumulator/dryer 126. The outside heat exchanger 116 is located outside of the passenger compartment. The first and second inside heat exchangers 112,114 are typically located inside the passenger compartment, although the first and/or second heat exchanger may be positioned outside the passenger compartment but still used to treat air entering the passenger compartment. A first fluid passage 118 fluidly connects the outside heat exchanger 116 with the first inside heat exchanger 112 by way of the expansion device 122, and fluidly connects the outside heat exchanger 116 with the second inside heat exchanger 114 by way of the expansion device 122. A second fluid passage 120 fluidly connects the outside heat exchanger 116 with the second inside heat exchanger 114 by way of a reversing valve 128. The compressor 124 and the accumulator/dryer 126 fluidly connect with the second fluid passage 120 by way of the reversing valve 128. A third fluid passage 138 fluidly connects the first inside heat exchanger 112 with the accumulator/dryer 126. The compressor 124 has a fluid outlet 140 connected to the reversing valve 128. The compressor 124 has a fluid inlet 142 connected to the reversing valve 128 and to the third fluid passage 138, by way of the accumulator/dryer 126. First and second valves 130,132 are positioned on each side of the second inside heat exchanger 114. A third valve 134 is positioned on one side of the first inside heat exchanger 112 between the first inside heat exchanger and the first fluid passage 118.

During normal (cooling) operation of the air conditioning system 100, the reversing valve 128 is set to allow fluid flow in the direction X such that air passing through the first inside heat exchanger 112 is cooled so that the air conditioning system operates to cool the passenger compartment. In this cooling mode, the refrigerant fluid in the system 100 is pumped by the compressor 124 through the reversing valve 128, the outside heat exchanger 116, the expansion device 122, the first inside heat exchanger 112, the third fluid passage 138, and the accumulator/dryer 126 in succession before returning to the compressor. The first and second valves 130,132 are closed to substantially prevent fluid flow through the second inside heat exchanger 114.

When initial, supplemental, or prolonged heating of the passenger compartment is required, the reversing valve 128 is set to allow fluid flow in the direction Y such that air passing through the second inside heat exchanger 114 is heated so that the air conditioning system 100 operates to heat the passenger compartment. In this heat pump mode, the refrigerant fluid in the system 100 is pumped by the compressor 124 through the reversing valve 128, the second inside heat exchanger 114, the expansion device 122, the outside heat exchanger 116, the reversing valve, and the accumulator/dryer 126 in succession before returning to the compressor. The third valve 134 is closed to substantially prevent fluid flow into the first inside heat exchanger 112 from the first fluid passage 118.

As an alternative to the above described system 100. the expansion device 122 may be replaced by first and second expansion devices, the first expansion device being positioned between the first inside heat exchanger 112 and the first fluid passage 118, and the second expansion device being positioned between the second inside heat exchanger 114 and the first fluid passage. The first, second and third valves 130,132,134 may be solenoid actuated valves and/or check valves, or any other suitable type of valve. One of the first or second valves 130,132 may be omitted.

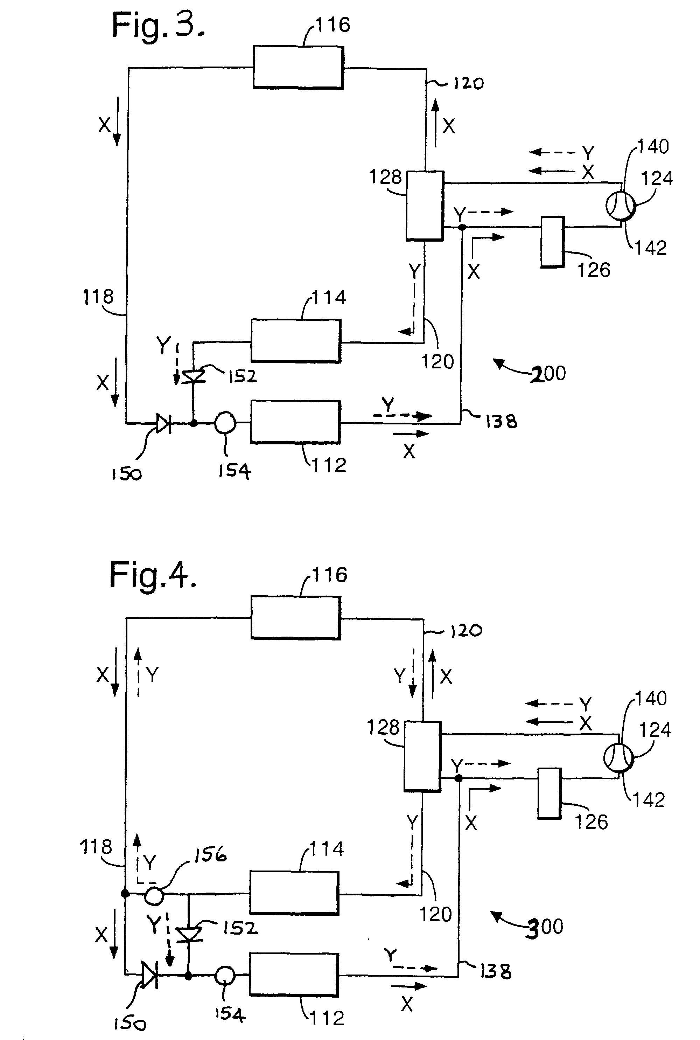

Referring to Figure 3 of the drawings, the second embodiment of air conditioning system 200 in accordance with the present invention is for use in a motor vehicle for heating or cooling the passenger compartment (not shown) of the motor vehicle. The second embodiment is substantially identical to the first embodiment, and like parts have been given the same reference numeral. In the second embodiment, the first, second and third valves 130-134 of the first embodiment have been replaced by first and second valves 150, 152; and the expansion device 122 of the first embodiment has been replaced by a first expansion device 154.

The first expansion device 154 is positioned between the first inside heat exchanger 112 and the first fluid passage 118. The first valve 150, which is preferably a check valve, is positioned between the first expansion device 154 and the first fluid passage 118. The second valve 152, which is preferably a check valve, is fluidly connected at one end to the second inside heat exchanger 114, and fluidly connected at the other end between the first valve 150 and the first expansion device 154. The first and second valves 150, 152 permit fluid flow through the respective valve in one direction only.

The operation of the second embodiment of air conditioning system 200 in accordance with the present invention is substantially the same as that described above for the first embodiment of air conditioning system 100 during the normal (cooling) operation, with fluid flowing in the direction X.

When initial, supplemental, or prolonged heating of the passenger compartment is required, the reversing valve 128 is set to allow fluid flow in the direction Y. In this embodiment, the fluid flow is through the second inside heat exchanger 114, the second valve 152, the first expansion device 154, the first inside heat exchanger 112 and the third fluid passage 138. Air passing through the second inside heat exchanger 114 is heated, so that the passenger compartment is heated. The air entering the passenger compartment may initially pass through the first inside heat exchanger 112 to be de-humidified before passing through the second inside heat exchanger to be heated.

Referring to Figure 4 of the drawings, the third embodiment of air conditioning system 300 in accordance with the present invention is for use in a motor vehicle for heating or cooling the passenger compartment (not shown) of the motor vehicle. The third embodiment is substantially identical to the second embodiment, and like parts have been given the same reference numeral. In the third embodiment, a one way second expansion device 156 is positioned between the second inside heat exchanger 114 and the first fluid passage 118, and the second valve 152 is fluidly connected at the one end between the second expansion device and the second inside heat exchanger 114.

The operation of the third embodiment of air conditioning system 300 in accordance with the present invention is substantially the same as that described above for the first and second embodiments of air conditioning system 100, 200 during the normal (cooling) operation, with fluid flowing in the direction X.

When initial, supplemental, or prolonged heating of the passenger compartment is required, the reversing valve 128 is set to allow fluid flow in the direction Y. In this embodiment, the fluid flow is through the second inside heat exchanger 114, the second expansion device 156, the outside heat exchanger 116, and the reversing valve 128, and the fluid flow is through the second inside heat exchanger 114, the second valve 152, the first expansion device 154, the first inside heat exchanger 112 and the third fluid passage 138. Air passing through the second inside heat exchanger 114 is heated, so that the passenger compartment is heated. The air entering the passenger compartment may initially pass through the first inside heat exchanger 112 to be de-humidified before passing through the second inside heat exchanger to be heated. Compared to the second embodiment, the third embodiment provides less de-humidification of the air entering the passenger compartment, but greater heating.

Compared to the prior art system 10 shown in Figure 1, the system 100,200,300 of the present invention does not require a fourth valve positioned on the output side of the first inside heat exchanger 112, and the output side of the first inside heat exchanger is fluidly connected directly to the accumulator/dryer 126 by way of the third fluid passage 138 thereby bypassing the reversing valve 128. The direct connection to the low pressure at the accumulator/dryer, or compressor inlet 142, allows any refrigerant fluid in the first inside heat exchanger 112 to leave the first inside heat exchanger when the system 100,200 is switched to heat pump mode. By bypassing the reversing valve 128 and by removing the fourth valve, the performance of the system 100,200,300 is improved during cooling mode, when compared to the known system 10 of Figure 1.

As further alternatives to the above described embodiments, the accumulator/dryer 126 may be located elsewhere in the system 100,200,300. Other forms of reverse flow means may be used instead of a reversing valve 128.

## Claims

1. An air conditioning system for the passenger compartment of a motor vehicle comprising an outside heat exchanger (116) positionable outside the passenger compartment; a first heat exchanger (112) for cooling air entering the passenger compartment; a second heat exchanger (114) for heating air entering the passenger compartment; a first fluid passage (118) between the outside heat exchanger and the first heat exchanger, and between the outside heat exchanger and the second heat exchanger; a second fluid passage (120) between the outside heat exchanger and the second heat exchanger; expansion means (122,154,156) positioned in or fluidly connected with the first fluid passage; reverse flow means (128) positioned in the second fluid passage for changing the direction of fluid flow; a compressor (124) having a fluid inlet (142) and a fluid outlet (140), for pumping fluid from the fluid outlet into the second fluid passage through the reverse flow means, and for receiving fluid at the fluid inlet from the second fluid passage through the reverse flow means; a third fluid passage (138) between the first heat exchanger and the fluid inlet of the compressor bypassing the reverse flow means; **characterised in** the compressor pumping fluid either in a first direction (X), in which the fluid flows sequentially through the reverse flow means, the outside heat exchanger, the expansion means, the first heat exchanger thereby by passing the second heat exchanger, and the third fluid passage, or in a second direction (Y), in which the fluid flows sequentially through the reverse flow means, the second heat exchanger, the expansion means, and then either through the outside heat exchanger and the reverse flow means, or through the first heat exchanger and the third fluid passage, or through the outside heat exchanger and the reverse flow means and through the first heat exchanger and the third fluid passage.

2. An air conditioning system as claimed in Claim 1, wherein a valve (130,132,152) is positioned on one side of the second heat exchanger (114) to substantially prevent fluid flow through the second heat exchanger when fluid is pumped in the first direction (X).

3. An air conditioning system as claimed in Claim 1 or Claim 2, wherein a valve (134) is positioned between the first heat exchanger (112) and the first fluid passage (118) to substantially prevent fluid flow through the first heat exchanger when fluid is pumped in the second direction (Y).

4. An air conditioning system as claimed in any one of Claims 1 to 3, wherein an accumulator/dryer (126) is positioned between the fluid inlet (142) of the compressor (124) and the reverse flow means (128) and third fluid passage (138).

5. An air conditioning system as claimed in any one of Claims 1 to 4, wherein the expansion means is an expansion device (122) positioned in the first fluid passage (118).

6. An air conditioning system as claimed in any one of Claims 1 to 4, wherein the expansion means comprises a first expansion device (154) positioned between the first heat exchanger (112) and the first fluid passage (118).

7. An air conditioning system as claimed in Claim 6, wherein the expansion means further comprises a second expansion device (156) positioned between the second heat exchanger (114) and the first fluid passage (118).

8. An air conditioning system as claimed in any one of Claims 1 to 7, wherein the reverse flow means is a reversing valve (128).

## Patentansprüche

1. Klimatisierungssystem für den Fahrgastraum eines Kraftfahrzeuges umfassend einen äußeren Wärmetauscher (116), der außerhalb des Fahrgastraums angeordnet werden kann; einen ersten Wärmetauscher (112) zum Kühlen von Luft, die in den Fahrgastraum eintritt; einen zweiten Wärmetauscher (114) zum Heizen von Luft, die in den Fahrgastraum eintritt; einen ersten Fluiddurchgang (118) zwischen dem äußeren Wärmetauscher und dem ersten Wärmetauscher, und zwischen dem äußeren Wärmetauscher und dem zweiten Wärmetauscher; einen zweiten Fluiddurchgang (120) zwischen dem äußeren Wärmetauscher und dem zweiten Wärmetauscher; ein Expansionsmittel (122, 154, 156), das in dem ersten Fluiddurchgang angeordnet ist oder in Fluidverbindung mit diesem steht; ein Rückflussmittel (128), das in dem zweiten Fluiddurchgang zur Veränderung der Richtung der Fluidströmung angeordnet ist; einen Kompressor (124) mit einem Fluideinlass (142) und einem Fluidauslass (140) zum Pumpen von Flüssigkeit von dem Fluidauslass in den zweiten Fluiddurchgang hinein durch das Rückflussmittel und zum Aufnehmen von Flüssigkeit an dem Fluideinlass von dem zweiten Fluiddurchgang durch das Rückflussmittel; einen dritten Fluiddurchgang (138) zwischen dem ersten Wärmetauscher und dem Fluideinlass des Kompressors, welcher das Rückflussmittel umgeht; **dadurch gekennzeichnet, dass** der Kompressor Flüssigkeit entweder in eine erste Richtung (X) pumpt, in welcher die Flüssigkeit der Reihe nach durch das Rückflussmittel, den äußeren Wärmetauscher, das Expansionsmittel, den ersten Wärmetauscher, wobei sie den zweiten Wärmetauscher umgeht, und den dritten Fluiddurchgang strömt, oder in eine zweite Richtung (Y) pumpt, in welcher die Flüssigkeit der Reihe nach durch das Rückflussmittel, den zweiten Wärmetauscher, das Expansionsmittel, und dann entweder durch den äußeren Wärmetauscher und das Rückflussmittel, oder durch den ersten Wärmetauscher und den dritten Fluiddurchgang, oder durch den äußeren Wärmetauscher und das Rückflussmittel und durch den ersten Wärmetauscher und den dritten Fluiddurchgang strömt.

2. Klimatisierungssystem nach Anspruch 1, worin ein Ventil (130, 132, 152) an einer Seite des zweiten Wärmetauschers (114) angeordnet ist, um im Wesentlichen eine Fluidströmung durch den zweiten Wärmetauscher zu verhindern, wenn Flüssigkeit in die erste Richtung (X) gepumpt wird.

3. Klimatisierungssystem nach Anspruch 1 oder Anspruch 2, worin ein Ventil (134) zwischen dem ersten Wärmetauscher (112) und dem ersten Fluiddurchgang (118) angeordnet ist, um im Wesentlichen eine Fluidströmung durch den ersten Wärmetauscher zu verhindern, wenn Flüssigkeit in die zweite Richtung (Y) gepumpt wird.

4. Klimatisierungssystem nach einem der Ansprüche 1 bis 3, worin ein Sammler/Trockner (126) zwischen dem Fluideinlass (142) des Kompressors (124) und dem Rückflussmittel (128) und dem dritten Fluiddurchgang (138) angeordnet ist.

5. Klimatisierungssystem nach einem der Ansprüche 1 bis 4, worin das Expansionsmittel eine Expansionsvorrichtung (122) ist, die in dem ersten Fluiddurchgang (118) angeordnet ist.

6. Klimatisierungssystem nach einem der Ansprüche 1 bis 4, worin das Expansionsmittel eine erste Expansionsvorrichtung (154) umfasst, die zwischen dem ersten Wärmetauscher (112) und dem ersten Fluiddurchgang (118) angeordnet ist.

7. Klimatisierungssystem nach Anspruch 6, worin das Expansionsmittel ferner eine zweite Expansionsvorrichtung (156) umfasst, die zwischen dem zweiten Wärmetauscher (114) und dem ersten Fluiddurchgang (118) angeordnet ist.

8. Klimatisierungssystem nach einem der Ansprüche 1 bis 7, worin das Rückflussmittel ein Umschaltventil (128) ist.

## Revendications

1. Système de climatisation pour l'habitacle d'un véhicule à moteur comprenant un échangeur de chaleur extérieur (116) pouvant être positionné à l'extérieur de l'habitacle ; un premier échangeur de chaleur (112) pour refroidir l'air qui pénètre dans l'habitacle ; un deuxième échangeur de chaleur (114) pour chauffer l'air qui pénètre dans l'habitacle ; un premier passage de fluide (118) entre l'échangeur de chaleur extérieur et le premier échangeur de chaleur et entre l'échangeur de chaleur extérieur et le deuxième échangeur de chaleur ; un deuxième passage de fluide (120) entre l'échangeur de chaleur extérieur et le deuxième échangeur de chaleur ; des moyens de détente (122, 154, 156) positionnés dans le premier passage de fluide ou reliés fluidiquement à celui-ci ; des moyens d'écoulement inverse (128) positionnés dans le deuxième passage de fluide pour modifier la direction d'écoulement de fluide ; un compresseur (124) comportant un orifice d'entrée de fluide (142) et un orifice de sortie de fluide (140), pour pomper du fluide de l'orifice de sortie de fluide dans le deuxième passage de fluide à travers les moyens d'écoulement inverse et pour recevoir du fluide au niveau de l'orifice d'entrée de fluide du deuxième passage de fluide à travers les moyens d'écoulement inverse ; un troisième passage de fluide (138) entre le premier échangeur de chaleur et l'orifice d'entrée de fluide du compresseur contournant les moyens d'écoulement inverse ; **caractérisé en ce que** le compresseur pompe le fluide soit dans une première direction (X), dans laquelle le fluide s'écoule de manière séquentielle à travers les moyens d'écoulement inverse, l'échangeur de chaleur extérieur, les moyens de détente, le premier échangeur de chaleur, contournant de ce fait le deuxième échangeur de chaleur, et le troisième passage de fluide, soit dans une deuxième direction (Y), dans laquelle le fluide s'écoule de manière séquentielle à travers les moyens d'écoulement inverse, le deuxième échangeur de chaleur, les moyens de détente et, ensuite, soit à travers l'échangeur de chaleur extérieur et les moyens d'écoulement inverse, soit à travers le premier échangeur de chaleur et le troisième passage de fluide, soit à travers l'échangeur de chaleur extérieur et les moyens d'écoulement inverse et à travers le premier échangeur de chaleur et le troisième passage de fluide.

2. Système de climatisation selon la revendication 1, dans lequel une vanne (130, 132, 152) est positionnée d'un côté du deuxième échangeur de chaleur (114) pour empêcher sensiblement un écoulement de fluide à travers le deuxième échangeur de chaleur lorsque du fluide est pompé dans la première direction (X).

3. Système de climatisation selon la revendication 1 ou la revendication 2, dans lequel une vanne (134) est positionnée entre le premier échangeur de chaleur (112) et le premier passage de fluide (118) pour empêcher sensiblement un écoulement de fluide à travers le premier échangeur de chaleur lorsque du fluide est pompé dans la deuxième direction (Y).

4. Système de climatisation selon l'une quelconque des revendications 1 à 3, dans lequel un accumulateur/sécheur (126) est positionné entre l'orifice d'entrée de fluide (142) du compresseur (124) et les moyens d'écoulement inverse (128) et le troisième passage de fluide (138).

5. Système de climatisation selon l'une quelconque des revendications 1 à 4, dans lequel les moyens de détente sont un dispositif de détente (122) positionné dans le premier passage de fluide (118).

6. Système de climatisation selon l'une quelconque des revendications 1 à 4, dans lequel les moyens de détente comprennent un premier dispositif de détente (154) positionné entre le premier échangeur de chaleur (112) et le premier passage de fluide (118).

7. Système de climatisation selon la revendication 6, dans lequel les moyens de détente comprennent, en outre, un deuxième dispositif de détente (156) positionné entre le deuxième échangeur de chaleur (114) et le premier passage de fluide (118).

8. Système de climatisation selon l'une quelconque des revendications 1 à 7, dans lequel les moyens d'écoulement inverse sont une vanne d'inversion (128).
